# EUROPÄISCHE PATENTANMELDUNG

(11) **EP 4 725 828 A1**
(43) Veröffentlichungstag der Anmeldung: **15.04.2026**
(21) Anmeldenummer: 25204361.7
(22) Anmeldetag: 24.09.2025
(51) Int. Cl.: B63B 49/00, B63B 79/10, G01S 17/93

(54) **VERFAHREN ZUM BEREINIGEN EINER MESSWERTREIHE, KAJENSCHUTZEINRICHTUNG UND HAFENTERMINAL**

(30) Priorität: 01.10.2024 DE 102024128404
(71) Anmelder: Freie Hansestadt Bremen (Stadtgemeinde), 28195 Bremen (DE)
(72) Erfinder: Kara, Peter, 26954 Nordenham (DE)
(74) Vertreter: Weidner Stern Jeschke

(57) **Zusammenfassung**

Die Erfindung betrifft ein Verfahren zum Bereinigen einer Messwertreihe, eine Kajenschutzeinrichtung und ein Hafenterminal. Das Verfahren weist die Schritte Ermitteln eines ersten Sensorwertes während eines Anlege- und/oder Ablegemanövers eines Schiffes mittels eines ersten landseitig angeordneten Abstandssensors zu einem ersten Zeitpunkt, Hinzufügen des ersten Sensorwertes zu der Messwertreihe in einem Schritt, Feststellen einer über einem vordefinierten Schwellwert liegenden Abweichung des ersten Sensorwertes gegenüber zumindest einem zweiten Sensorwert oder gegenüber einem aus zumindest dem zweiten Sensorwert abgeleiteten Parameter mittels einer Auswerteeinheit in einem weiteren Schritt und im Ansprechen darauf in einem letzten Schritt Eliminieren des ersten Sensorwertes aus der Messwertreihe, sodass eine bereinigte Messwertreihe für die Qualitätsbeurteilung des Anlege- und/oder Ablegemanövers des Schiffes vorliegt, auf.

## Beschreibung

Die Erfindung betrifft ein Verfahren zum Bereinigen einer Messwertreihe, eine Kajenschutzeinrichtung und ein Hafenterminal.

Im Stand der Technik ist bekannt, dass Daten von Anlegemanövern von Schiffen mittels technischer Systeme, wie Abstandssensoren, GPS-Sensoren oder dergleichen, erfassbar sind. Die derart ermittelten Daten werden teilweise den handelnden Personen, werden Kapitänen oder Lotsen, oder automatisierten Steuerungssystemen zugeführt. Handelnde Personen können Entscheidungen zur Steuerung des Schiffes auf die erhaltenen Daten abstellen. Die Steuerungssysteme können eingerichtet sein, anhand der bereitgestellten Daten automatisiert eine Qualität des Anlegemanövers zu überwachen und/oder zu steuern.

Die Verwendung der ermittelten Daten zur Steuerung des Schiffes durch einen Kapitän, Lotsen und/oder eine Vorrichtung zur automatisierten Steuerung des Schiffes erfordert eine hohe Qualität der Daten, insofern große Lasten und Gewichte bewegt werden und bei einer Missinterpretation der Daten oder fehlerhafter Daten eine auf diesen Daten abgestellte Steuerung des Schiffes gefahrbringend sein kann. Ein hohes Gefahrenpotential besteht insbesondere darin, dass das Schiff sich der Kaje mit einer zu hohen Geschwindigkeit oder einem falschen Winkel nähert, welche oder welchen eine das Schiff steuernde Entität auf Grund fehlerhafter bereitgestellter Daten eingestellt hat. Solche oder eine ähnliche Auswirkung fehlerhafter Daten geht mit einer Gefahr einer Kollision des Schiffes mit der Bauwerksstrukturen, insbesondere der Kaje, einher, wodurch letztlich neben den Schäden an Schiff und Bauwerk auch Ausfallzeiten des Hafenterminals oder sogar Gefahren für menschliches Leben einhergehen können. Es liegt somit ein großes Interesse vor, dass bereinigte Daten vorliegen.

Da während des Anlegemanövers Störfaktoren auftreten können, welche mittels der technischen Systeme ermittelten Daten beeinflussen können, müssen die Daten geprüft und Daten, welche auf Grund von einem Störfaktor nicht plausibel sind, erkannt und eliminiert werden.

Im Stand der Technik ist es bekannt, dass die ermittelten Daten von einer Fachkraft bewertet werden. Die Fachkraft kann der Kapitän oder Lotse oder eine andere geschulte Person sein. Die Daten können an einem Bereitstellungsort, insbesondere auf einem Schiff, oder an einem Entstehungsort, insbesondere an dem Hafenterminal, geprüft werden.

Die US 2024/0288866 A1 offenbart ein System, welches zur Unterstützung von Anlegemanövern sensorisch Schiffsdaten ermittelt und anhand der ermittelten Schiffsdaten ein Anlegemanöver unterstützt.

In der KR 10 2025 0042972 ist ein Kajenüberwachungssystem offenbart. Das Überwachungssystem dient insbesondere einer Konfektion von Fendern zur Aufnahme von schiffsinduzierten Kräften.

In der KR 10 2025 008177 ist ein schwimmender Pier offenbart, welches Schubeinrichtungen aufweist, um Anfahrkräfte von einem Schiff zu absorbieren.

Die WO 2023/233741 A1 offenbart eine Anlege- und Schiffshandhabungsüberwachungsvorrichtung, mittels welcher das Anlegen und die Schiffshandhabung überwacht werden kann.

Der bekannte Stand der Technik weist den Nachteil auf, dass ein hoher Aufwand vorliegt, um die ermittelten Daten zu bereinigen. Darüber hinaus weist der bekannte Stand der Technik den Nachteil auf, dass die Prüfung kostenintensiv ist. Schließlich weist der bekannte Stand der Technik auf, dass eine Fachkraft zur Prüfung der Daten abgestellt sein muss.

Aufgabe der Erfindung ist es, den Stand der Technik zu verbessern.

Gelöst wird die Aufgabe durch ein Verfahren zum Bereinigen einer mit Sensorwerten befüllten Messwertreihe, wobei die Messwertreihe zu vordefinierten Zeitpunkten mit Sensordaten befüllt ist, sodass die Messwertreihe zu einem ersten Zeitpunkt eine Vielzahl speichertechnisch hinterlegter Sensorwerte aufweist und wobei die Messwertreihe insbesondere eine Datenbasis für eine Qualitätsbeurteilung eines Anlege- und/oder Ablegemanövers eines Schiffes an einer Kaje ist, aufweisend die Schritte:
- Ermitteln eines ersten Sensorwerts während des Anlege- und/oder Ablegemanövers des Schiffes mittels eines ersten landseitig angeordneten Abstandssensors zu einem ersten Zeitpunkt,
- Hinzufügen des ersten Sensorwertes zu der Messwertreihe,
- Feststellen einer über einem vordefinierten Schwellwert liegenden Abweichung des ersten Sensorwertes gegenüber zumindest einem, zu dem ersten Zeitpunkt bereits in der Messwertreihe speichertechnisch hinterlegten zweiten Sensorwert oder gegenüber einem aus zumindest dem zweiten Sensorwert abgeleiteten Parameter mittels einer Auswerteeinheit und im Ansprechen darauf
- Eliminieren des ersten Sensorwertes aus der Messwertreihe, sodass eine bereinigte Messwertreihe für die Qualitätsbeurteilung des Anlege- und/oder Ablegemanövers des Schiffs vorliegt.

Vorteilhafterweise ist mittels des erfindungsgemäßen Verfahrens eine automatisierte Bereinigung einer Messwertreihe realisiert.

Weiter vorteilhafterweise realisiert das erfindungsgemäße Verfahren eine geringere Notwendigkeit einer Beurteilung der Sensorwerte, auch Messwerte genannt, durch einen Fachmann.

Somit ist durch das erfindungsgemäße Verfahren eine kostengünstige Observation eines Anlege- und/oder Ablegemanövers eines Schiffes an einer Kaje realisierbar.

Die Messwertreihe kann einem Kapitän, einem Lotsen und/oder einem Steuerungssystem zur automatisierten Steuerung des Schiffes zur Beurteilung eines aktuell ausgeführten Anlege- und/oder Ablegemanövers des Schiffes und/oder Steuerung des aktuell ausgeführten Anlege- und/oder Ablegemanövers des Schiffes zur Verfügung gestellt werden und weist dabei eine hohe Sicherheit einer Richtigkeit der in der Messwertreihe hinterlegten Sensorwerte auf. Hierdurch ist eine Gefährdung einer Kollision vorteilhafterweise reduziert.

Ein wesentlicher Gedanke der Erfindung beruht insbesondere darauf, dass eine Plausibilitätsprüfung eines Messwertes für ein Ablege- und/oder Anlegemanöver eines Schiffes anhand vorheriger Werte durchgeführt und nicht plausibel erscheinende Sensorwerte automatisiert eliminiert werden.

Folgendes Begriffliche sei erläutert:
Unter einer "Messwertreihe" wird insbesondere eine speichertechnisch insbesondere in einer Datenbank hinterlegte Ansammlung einer Vielzahl Sensorwerte verstanden. Die Sensorwerte sind insbesondere ermittelte Messwerte. Die Sensorwerte können der Messwertreihe insbesondere hinzugefügt werden, können in der Messwertreihe geändert werden und/oder können aus der Meswertreihe gelöscht werden. Den in der Messwertreihe hinterlegten Sensorwerten kann insbesondere ein jeweiliger Aufnahmezeitpunkt zugeordnet sein. Die Messwertreihe kann insbesondere in einem Speicher speichertechnisch hinterlegt sein.

Die Messwertreihe wird insbesondere zu vordefinierten Zeitpunkten mit Sensordaten befüllt. Die vordefinierten Zeitpunkte weisen insbesondere einen zeitlichen Abstand zueinander auf. Ein zeitlicher Abstand der vordefinierten Zeitpunkte kann mit jeweiligen Aufnahmezeitpunkten der Sensorwerte mittels eines ersten Abstandssensors korrelieren und in einer Ausführungsform derart ausgestaltet sein, dass ein bis zehn Sensorwerte pro Sekunde, insbesondere sechs Sensorwerte pro Sekunde, von dem ersten Abstandssensor aufgenommen und mit einem geringen zeitlichen Verzug gegenüber dem jeweiligen Aufnahmezeitpunkt der Messwertreihe zugefügt werden. Zusätzlich oder alternativ können mehr Sensorwerte ermittelt werden, als verwendet werden, insbesondere können siebenfach so viele Sensorwerte ermittelt werden, wie genutzt werden. Die Aufnahmezeitpunkte und Befüllungszeitpunkte von mittels weiterer Abstandssensoren ermittelten Sensorwerten können denen des ersten Abstandssensors entsprechen oder hiervon abweichen, wobei sinnhaft gleiches für diese gilt, wir für die Aufnahmezeitpunkte und Befüllzeitpunkte des ersten Abstandssensors.

Ein Start des erfindungsgemäßen Verfahrens geht insbesondere mit einem Beginn eines Anlege- und/oder Ablegemanövers eines Schiffes an einer Kaje einher. Dem Start des erfindungsgemäßen Verfahrens kann eine Initialisierungsphase vorangestellt sein. In der Initialisierungsphase werden insbesondere ermittelte Sensorwerte ohne eine Prüfung mittels eines erfindungsgemäßen Verfahrens in der Messwertreihe abgelegt. Die Initialisierungsphase kann insbesondere solange erfolgen, bis eine vordefinierte Anzahl Sensorwerte, insbesondere eine größere Menge von Sensorwerte ohne Normabweichung, wie vier Sensorwerte bis 50 Sensorwerte, in der Messwertreihe vorliegen. Im Ansprechen auf das Ende der Initialisierungsphase wird insbesondere das erfindungsgemäße Verfahren angewendet. Die initial in der Messwertreihe eingebrachten Sensorwerte können von einer Fachkraft überprüft sein.

Der "erste Abstandssensor" ist insbesondere ein geeignetes Aufnahmegerät zur Ermittlung eines Abstands, insbesondere eines Abstands des ersten Abstandssensors zu einem Gegenstand, insbesondere einem Schiff. Der erste Abstandssensor ist insbesondere landseitig, insbesondere an einer Kaje und/oder im Bereich der Kaje angeordnet. Der erste Abstandssensor spannt insbesondere wasserseitig einen Erfassungsbereich auf. Das Schiff ist während der Durchführung des Verfahrens insbesondere in einem Erfassungsbereich des ersten Abstandssensors angeordnet.

Der erste Abstandssensor ist datenaustauschend mit dem Speicher, in welchem die Messwertreihe hinterlegt ist, verbunden. Die datentechnische Verbindung kann kabelgebunden und/oder funktechnisch ausgestaltet sein. Der erste Abstandssensor ist eingerichtet, den ermittelten ersten Sensorwert der Messwertreihe mittelbar oder unmittelbar hinzuzufügen. Das Befüllen der Messwertreihe erfolgt somit mittelbar oder unmittelbar durch den Sensorwerte ermittelnden ersten Abstandssensors.

Ein mittelbares Befüllen der Messwertreihe kann insbesondere unter Verwendung einer Steuerungseinheit erfolgen, welche die vom ersten Abstandssensor ermittelten Sensorwerte empfängt und zur Speicherung aufbereitet, sowie zur Speicherung in der Messwertreihe an den Speicher übergibt. Eine datentechnische Verbindung zwischen dem ersten Abstandssensor und der Steuerungseinheit kann kabelgebunden und/oder funktechnisch ausgeführt sein.

Der erste Abstandssensor kann ein Radarsensor sein. Zusätzlich oder alternativ kann der Abstandssensor ein Lasersensor, ein kapazitiver Sensor, ein Ultraschallsensor und/oder dergleichen sein. Der erste Abstandssensor kann eingerichtet sein, anhand einer zeitlichen Differenz zwischen dem Aussenden eines Messsignals, welches von dem Schiff reflektiert wird, und dem Empfangen des reflektierten Signals eine Entfernung zu dem Schiff und somit einen Abstand zwischen dem Schiff und dem ersten Abstandssensor zu ermitteln. Der Bereich des Schiffes, an welchem das Signal reflektiert wird, wird Reflexionspunkt genannt. Der Reflexionspunkt liegt insbesondere auf einer Bordwand des Schiffes. Bei Verwendung eines Radarsensors liegt vorteilhafterweise eine geringe Störanfälligkeit bezüglich Umweltfaktoren, wie Nebel, vor.

Insofern der erste Abstandssensor an der Kaje angeordnet ist entspricht der ermittelte Abstand des ersten Abstandssensors von dem Schiff einem Abstand des Schiffes von der Kaje. Zusätzlich oder alternativ kann ein Offset verwendet werden, um anhand eines Abstands zwischen dem ersten Abstandssensor und dem Schiff einen Abstand zwischen dem Schiff und der Kaje abzuleiten. Vorteilhafterweise ermittelt der erste Abstandssensor einen Abstand zwischen dem erste Abstandssensor und dem Schiff und/oder der Kaje und dem Schiff.

Der zweite Abstandssensor und/oder weitere Abstandssensoren, können in gleicher Weise ausgestaltet sein, wie der erste Abstandssensor, wobei sie bevorzugt beabstandet zu dem ersten Abstandssensor an der Kaje oder im Bereich der Kaje angeordnet sind. Zusätzlich oder alternativ kann der zweite Abstandssensor und/oder weiterer Abstandssensor eingerichtet sein, die Messwertreihe oder den befüllenden Abstandssensoren jeweilig zugeordnete Messwertreihen befüllen. Die jeweilig zugeordneten Messwertreihen können sämtlich im Speicher hinterlegt sein und/oder miteinander verknüpft sein.

Ein "Sensorwert", auch Messwert genannt, ist somit insbesondere ein Abstand von dem ersten, zweiten oder weiteren Abstandssensor zu dem Schiff zu einem Zeitpunkt einer Ermittlung.

Unter einem "Anlegemanöver" wird insbesondere das Ankommen des Schiffes auf einer Wasserstraße bis zu einer Hafenanlage, welche insbesondere die Kaje aufweist, verstanden. Das Anlegemanöver beinhaltet eine Annäherung des Schiffes an die Kaje mit einer Vorschubgeschwindigkeit und einer Vorschubrichtung, welche über die Zeit nicht konstant sein müssen. Aus einer Vorschubrichtung ist ein Anlegewinkel oder Ablegewinkel des Schiffs gegenüber der Kaje ermittelbar. Das Anlegen des Schiffes an der Kaje ist abgeschlossen, wenn das Schiff im Wesentlichen parallel zu der Kaje an einer vordefinierten Anlegeposition angekommen ist und eine Vorschubgeschwindigkeit im Wesentlichen gleich Null ist. Sodann wird im Allgemeinen die Position des Schiffes bezüglich der Kaje unter Einschränkung der Beweglichkeit des Schiffes mittels entsprechender Sicherungseinrichtungen, wie Taue und Festmacher, fixiert.

Unter einem "Ablegemanöver" wird insbesondere das Abfahren des Schiffes von einer Hafenanlage auf einer Wasserstraße verstanden. Zur Initialisierung eines Ablegemanövers wird eine Beweglichkeit des Schiffes unter Aufhebung der Sicherungseinrichtungen wiederhergestellt und das Schiff entfernt sich mit einer Vorschubrichtung und Vorschubgeschwindigkeit von der Kaje, welche über die Zeit nicht konstant sein müssen.

Zur Einschränkung der Beweglichkeit des Schiffes und/oder Aufhebung der Einschränkung der Beweglichkeit des Schiffes an der Kaje werden insbesondere Taue zwischen dem Schiff und der Kaje bewegt. Darüber hinaus sind im Bereich der Kaje Vögel, insbesondere Möwen, beheimatet, welche entlang des Schiffes fliegen können. Wenn vorgenannte Gegenstände sich während einer jeweiligen Messung des dem ersten, zweiten oder weiteren Abstandssensor zwischen dem ersten, zweiten oder weiteren Abstandssensor und dem Schiff befinden, kann durch derlei Störfaktoren ein fehlerhafter Abstand ermittelt werden. Vorteilhafterweise wird ein fehlerhafter Abstand ermittelt und aus der Messwertreihe eliminiert.

Der "vordefinierte Schwellwert" kann ein absoluter Wert und/oder ein relativer Wert sein. Zusätzlich oder alternativ kann der vordefinierte Schwellwert programmbasiert, insbesondere unter Verwendung zumindest einer Methode aus dem Bereich künstliche Intelligenz und/oder eines KI Systems ermittelt sein. Schließlich kann der vordefinierte Schwellwert anpassbar sein, insbesondere unter Berücksichtigung aktueller Umweltbedingungen, einer aktuellen Schiffsanzahl in einem vordefinierten Wasserbereich oder dergleichen.

Der absolute Wert ist insbesondere eine Längendifferenz, insbesondere in Metern angegeben, und wird unter Berücksichtigung einer zeitlichen Differenz der Aufnahmezeitpunkte bewertet. Der vordefinierte Schwellwert als absoluter Wert kann bei einer zeitlichen Differenz der Aufnahmezeitpunkte von einer Sekunde 5 cm bis 17cm betragen. Der relative Wert ist insbesondere eine Längendifferenz in Bezug auf die Zeit, insbesondere in Metern pro Minute angegeben. Der vordefinierte Schwellwert als relativer Wert kann 5 cm / s bis 17 cm / s betragen. Mittels einer Überprüfung einer Abweichung zwischen dem ersten Sensorwert und einem zu dem ersten Zeitpunkt bereits in der Messwertreihe speichertechnisch hinterlegten zweiten Sensorwert ist somit eine Abstandsänderung des Schiffes gegenüber der Kaje feststellbar.

Liegt die Abweichung über dem vordefinierten Schwellwert, bedeutet dies, dass der ermittelte erste Sensorwert nicht plausibel ist. Die unter Berücksichtigung des Schwellwerts unverhältnismäßig große Abweichung kann insbesondere durch einen Störfaktor, wie ein Tau oder eine Möwe, verursacht sein. Der Störfaktor kann zusätzlich oder alternativ dem Verschieben eines Reflexionspunktes des ersten, zweiten oder weiteren Abstandssensors an dem Schiff entsprechen, wodurch der Reflexionspunkt nicht mehr auf der Bordwand des Schiffs, sondern insbesondere auf Schiffsaufbauten, wie Ladung oder einer Brücke, zum Liegen kommt. Die Verschiebung kann insbesondere durch Wellengang und eine daraus resultierende Vertikalbewegung des Schiffes induziert sein. Weitere Störfaktoren sind möglich und nicht einschränkend für das erfindungsgemäße Verfahren. Vorteilhafterweise werden unter Beeinflussung von Störfaktoren ermittelte Sensorwerte durch das erfindungsgemäße Verfahren und somit die Beurteilung der Plausibilität des ersten Sensorwertes erkannt und der somit unplausible erste Sensorwert im weiteren Verlauf des Verfahrens aus der Messwertreihe eliminiert.

Die "Auswerteeinheit" kann insbesondere ein Steuergerät mit einem Dateneingang und einem Datenausgang sein, welches programmtechnisch insbesondere dazu eingerichtet ist, ein erfindungsgemäßes Verfahren auszuführen. Zusätzlich oder alternativ ist die Auswerteeinheit kabelgebunden und/oder funktechnisch mit datenliefernden Systemen, wie dem ersten Abstandssensor und/oder dem zweiten Abstandssensor, sowie dem Speicher und über den Datenausgang mit einem zusätzlichen oder alternativen Speicher und/oder demselben Speicher verbunden.

Die Auswerteeinheit ist insbesondere programmtechnisch zum Ermitteln einer Abweichung des ersten Sensorwertes von dem zweiten Sensorwert eingerichtet. Derart ist insbesondere eine Prüfung des ersten Sensorwertes bezogen auf einen vorherigen Abstand des Schiffes zu dem ersten Sensorwert realisiert. Zusätzlich oder alternativ kann die Auswerteeinheit eingerichtet sein, anhand zum ersten Zeitpunkt speichertechnisch in der Messwertreihe hinterlegter Sensorwerte, insbesondere zumindest unter Verwendung des zweiten Sensorwertes, einen Schiffsparameter, wie die Vorschubgeschwindigkeit, abzuleiten und den ersten Sensorwert gegenüber dem ermittelten abgeleiteten Parameter zu prüfen. Entsprechend ist in einer Ausführungsform der abgeleitete Parameter eine mathematische Ableitung zumindest des zweiten Sensorwertes und eines dritten Sensorwertes, eines vierten Sensorwertes und/oder eines weiteren Sensorwertes. Der dritte Sensorwert, vierte Sensorwert und/oder weitere Sensorwert liegen zum ersten Zeitpunkt insbesondere bereits in der Messwertreihe als speichertechnisch hinterlegter Sensorwert vor. Die Vorschubgeschwindigkeit des Schiffes ist insbesondere mathematisch aus zumindest dem zweiten Sensorwert abgeleitet. Schließlich kann die Auswerteeinheit eingerichtet sein, anhand von Sensorwerten, welche von unterschiedlichen Abstandssensoren ermittelt wurden, eine Vorschubrichtung des Schiffes abzuleiten, sodass der abgeleitete Parameter der Vorschubrichtung des Schiffes entspricht. Vorteilhafterweise wird derart die Plausibilität des ersten Sensorwertes in Bezug zu einem vorherigen ermittelten Abstand des Schiffes, in Bezug zu einer aus den vorherigen Sensorwerten abgeleiteten Vorschubgeschwindigkeit des Schiffes und/oder in Bezug zu einer aus den vorherigen Sensorwerten abgeleiteten Vorschubrichtung des Schiffes realisiert.

Der abgeleitete Parameter kann zusätzlich oder alternativ von einer externen Recheneinheit ermittelt sein. Ein abgeleiteter Parameter kann speichertechnisch hinterlegt und der Auswerteeinheit insbesondere zur Prüfung des ersten Sensorwertes bereitgestellt sein.

Vorteilhafterweise kann aus der Vorschubgeschwindigkeit des Schiffes und/oder der Vorschubrichtung eine Qualität des Anlägemanövers anhand der Annäherungsgeschwindigkeit und/oder Annäherungsrichtung des Schiffes abgeleitet werden. Zusätzlich oder alternativ kann anhand der Vorschubgeschwindigkeit des Schiffes und/oder der Vorschubrichtung eine Qualität des Ablegemanövers anhand des Beabstanden des Schiffes in Bezug auf die Kaje ermittelt werden. Derart ist insbesondere auch prognostizierbar, ob das Schiff in der vordefinierten Anlegeposition ankommen wird, insbesondere ohne dabei die Kaje zu tuschieren und/oder ob ein Ablegemanöver ohne ein tuschieren der Kaje erfolgten wird.

Unter "Eliminieren" wird verstanden, dass der erste Sensorwert im Ansprechen auf die Feststellung, dass eine über einem vorliegenden Schwellwert liegende Abweichung des ersten Sensorwertes gegenüber dem zweiten Sensorwert oder dem abgeleiteten Parameter vorliegt, aus der Messwertreihe gelöscht wird. Das Löschen kann mittelbar oder unmittelbar im Ansprechen auf ein von der Auswerteeinheit ausgegebenen Signals, welches die Feststellung repräsentiert, erfolgen. Vorteilhafterweise liegt nach dem Eliminieren des als nicht plausibel festgestellten ersten Sensorwertes eine bereinigte Messwertreihe vor. Die Messwertreihe kann insbesondere für eine Qualitätsbeurteilung eines Anlege- und/oder Ablegemanövers eines Schiffes verwendet werden. Auf Basis der Messwertreihe kann ein Lotse, Kapitän und/oder automatisiertes Schiffsteuerungssystem zumindest einen Schiffsparameter anpassen, um die Qualität des Anlege- und/oder Ablegemanövers zu verbessern.

Das Eliminieren erfolgt mit anderen Worten insbesondere explizit im Ansprechen auf die Feststellung, dass eine über einem vorliegenden Schwellwert liegende Abweichung des ersten Sensorwertes gegenüber dem zweiten Sensorwert oder dem abgeleiteten Parameter vorliegt. Zusätzlich kann ein Überschreiben von Sensorwerten in der befüllten Messwertreihe zur Wiedernutzung von Speicherkapazitäten erfolgen. Das Überschreiben entspricht im Wesentlichen nicht dem Eliminieren, da das Überschreiben rein die ältesten in der Messwertreihe gespeicherten Sensorwerte betrifft und das Eliminieren demgegenüber explizit ermittelte in der Messwertreihe gespeicherte Sensorwerte.

In einer Ausführungsform ist der zweite Sensorwert derjenige Sensorwert der Vielzahl in der Messwertreihe zum ersten Zeitpunkt speichertechnisch hinterlegten Sensorwerte, welcher den jüngsten Speicherzeitpunkt aufweist. Somit entspricht der zweite Sensorwert dem zum ersten Zeitpunkt zuletzt der Messwertreihe hinzugefügtem Sensorwert. Vorteilhafterweise ist derart gewährleistet, dass der erste Sensorwert in Bezug auf den zuletzt aufgenommenen Sensorwert oder einem aus zumindest diesem abgeleiteten Parameter überprüft wird. Derart werden eine hohe Qualität der Beurteilung und eine Berücksichtigung der aktuellen Situation sichergestellt.

Die Messwertreihe kann zusätzlich oder alternativ dazu eingerichtet sein, als Datenbasis zur Ermittlung eines Energieeintrags in die Kaje bei einer Kollision des Schiffes mit der Kaje verwendbar zu sein. Mit anderen Worten kann die Messwertreihe über einen Zeitraum, welcher über die Dauer des Anlege- und/oder Ablegemanöver hinausgeht gespeichert sein und erst zu einem viel späteren Zeitpunkt gelöscht werden. Die Messwertreihe und die darin enthaltenen plausibilitätsgeprüften Messwerte liefern eine Datenbasis zur Ermittlung eines Energieeintrags, insofern Abstände des Schiffes zur Kaje über die Zeit, Geschwindigkeiten und/oder Annäherungswinkel des Schiffes an die Kaje mit einer zeitlichen Zuordnung hinterlegt und/oder anhand der in der Messwertreihe gespeicherten Sensorwerte ableitbar sind. Zusätzlich oder alternativ können weitere Schiffsparameter, wie ein Tiefgang oder eine Länge, und/oder Umweltparameter, wie Wasserstand, Wetter- oder Windbedingungen, in der Messwertreihe hinterlegt sein.

Vorteilhafterweise werden die Sensorwerte der Messwertreihe derart für eine weitere Nutzung breitgestellt, wodurch Kosten für eine weitere Ermittlung von Sensordaten eingespart werden können. Durch die Bereinigung der Messwertreihe ist in der Folge auch die Qualität einer Beurteilung einer Auswirkung eines Energieeintrags vorteilhafterweise optimiert.

In einer weiteren Ausführungsform kann das Verfahren zusätzlich einen Schritt des Ermittelns eines fünften Sensorwertes mittels des ersten Abstandssensors und eines sechsten Sensorwertes umfassen. Der sechste Sensorwert wird dabei insbesondere von einem horizontal zu dem ersten Abstandssensor angeordneten zweiten Abstandssensor ermittelt. Der zweite Abstandssensor kann dieselben Merkmale wie der erste Abstandssensor aufweisen und/oder ein technologisch anders ausgeführter Abstandssensor als der erste Abstandssensor sein. Der zweite Abstandssensor ist insbesondere ebenfalls an der Kaje derart angeordnet, dass wasserseitig ein Erfassungsbereich aufgespannt ist. Die Anordnungshöhe des zweiten Abstandssensors kann einer Anordnungshöhe des ersten Abstandssensors entsprechen, sodass die Abstandssensoren im Wesentlichen eine selbe Höhe aufweisen und derart deren Erfassungsbereiche ebenfalls auf einer gleichen Höhe realisiert sind. Insofern ein Schiffsrumpf eine über die Höhe geänderte Kontur aufweist, ist derart vorteilhafterweise eine hohe Genauigkeit der Messungen des ersten Abstandssensors und zweiten Abstandssensors und somit eine optimierte Vergleichbarkeit der ermittelten Sensorwerte realisiert. Zusätzlich oder alternativ kann der zweite Abstandssensor in einer anderen Höhe als der erste Abstandssensor angeordnet sein. Schließlich kann ein Offset programmtechnisch umgesetzt sein, sodass eine unterschiedliche Höhe des ersten Abstandssensors und zweiten Abstandssensors bei einer Auswertung von Sensorwerten berücksichtigbar ist.

In einem weiteren Schritt werden der fünfte Sensorwert und der sechste Sensorwert insbesondere zu der Messwertreihe hinzugefügt. Der zweite Abstandssensor ist hierfür insbesondere datentechnisch mit dem Speicher, auf welchem die Messwertreihe hinterlegt ist, verbunden. Der erste Abstandssensor und der zweite Abstandssensor können mittelbar oder unmittelbar jeweilige Sensorwerte zeitgleich der Messwertreihe hinzufügen, wobei programmtechnisch bei der Aufnahme und dem Hinterlegen der Sensorwerte in der Messwertreihe eine Reihenfolge aufgeprägt sein kann. Selbstverständlich können der erste Abstandssensor und der zweite Abstandssensor jeweilige Sensorwerte zu unterschiedlichen Zeitpunkten der Messwertreihe hinzufügen. Vorteilhafterweise liegen Sensorwerte unterschiedlicher Abstandssensoren in ein und derselben Messwertreihe vor. Zusätzlich oder alternativ kann der zweite Abstandssensor eingerichtet sein, die Sensorwerte in einer zweiten Messwertreihe zu hinterlegen, was für eine wenig komplexe Softwarearchitektur vorteilhaft sein kann.

In einem weiteren Schritt wird mittels der Auswerteeinheit ein Winkel, auch Annäherungswinkel oder Ablegewinkel, des Schiffes in Bezug auf die Kaje anhand des fünften Sensorwertes und des sechsten Sensorwertes festgestellt. Die Feststellung kann zusätzlich oder alternativ durch ein externe Recheneinheit erfolgen. Der Winkel kann ein weiterer abgeleiteter Parameter sein und speichertechnisch hinterlegt sein. Zusätzlich oder alternativ kann anhand des fünften Sensorwertes und/oder des sechsten Sensorwertes eine Länge des Schiffes festgestellt sein. Eine Feststellung eines Winkels des Schiffes optimiert vorteilhafterweise eine Qualitätsbeurteilung eines Anlege- und/oder Ablegemanövers, insofern eine Parallelität des Schiffes gegenüber der Kaje anhand des Anlegewinkels und/oder eine Gefährdung einer Kollision optimiert feststellbar ist.

In einem weiteren Schritt wird mittels der Auswerteeinheit festgestellt, dass eine Abweichung des festgestellten Winkels gegenüber einem aus zumindest zwei speichertechnisch in der Messwertreihe zum zweiten Zeitpunkt hinterlegten Sensorwerten über einem vordefinierten Schwellwert liegt. Der vordefinierte Schwellwert kann größer 3°, insbesondere größer 10° und/oder bis 180° betragen.

Im Ansprechen auf die festgestellte Abweichung werden in einem weiteren Schritt des Verfahrens der fünfte Sensorwert und der sechste Sensorwert aus der Messwertreihe eliminiert. Derart liegt vorteilhafterweise eine bereinigte Messwertreihe vor. In einem weiteren Schritt kann eine erneute Messung initiiert werden, sodass weitere Messwerte vorliegen und eine erneute Prüfung erfolgt. Es ist vorstellbar, dass die eliminierten Sensorwerte erneut herangezogen werden, wenn die erneuten Messwerte ähnliche oder gleiche Messwerte wie die eliminierten Werte aufweisen.

In einem weiteren Aspekt wird die Aufgabe gelöst durch eine Kajenschutzeinrichtung, welche zum Ausführen eines erfindungsgemäßen Verfahrens eingerichtet ist. Die Kajenschutzeinrichtung weist insbesondere einen an einer Kaje angeordneten ersten Abstandssensor sowie eine über einen Dateneingang mit dem ersten Abstandssensor datenaustauschend verbundene Auswerteeinheit auf. Die Auswerteeinheit ist über einen Datenausgang insbesondere mit einem Speicher verbunden, in welchem eine Messwertreihe hinterlegt ist, welcher zu vordefinierten Zeitpunkten Messwerte hinzugefügt werden. Die Messwertreihe weist somit vor einem ersten Zeitpunkt insbesondere eine Vielzahl speichertechnisch hinterlegter Sensorwerte auf. Mittels des ersten Abstandssensors wird zum ersten Zeitpunkt, während eines Anlege- und/oder Ablegemanövers eines Schiffes an der Kaje, insbesondere ein erster Sensorwert ermittelt, wobei die Auswerteeinheit ausgestaltet und eingerichtet ist, den ersten Sensorwert zu der Messwertreihe hinzuzufügen und festzustellen, dass der erste Sensorwert gegenüber einem zu dem ersten Zeitpunkt bereits in der Messwertreihe speichertechnisch hinterlegten zweiten Sensorwert oder gegenüber einem aus zumindest dem zweiten Sensorwert abgeleiteten Parameter mit einer über einem vordefinierten Schwellwert liegenden Abweichung abweicht, und im Ansprechen darauf den ersten Sensorwert aus der Messwertreihe zu eliminieren. Derart liegt vorteilhafterweise eine bereinigte Messwertreihe vor.

In einer Ausführungsform ist die Kajenschutzeinrichtung zusätzlich eingerichtet, die in dem Speicher speichertechnisch hinterlegten Sensorwerte einer Recheneinheit zur Qualitätsbeurteilung des Anlege- und/oder Ablegemanövers des Schiffes bereitzustellen. Die Recheneinheit kann der Auswerteeinheit entsprechen. Zusätzlich oder alternativ kann mittels der Recheneinheit eine Beeinflussung des Anlege- und/oder Ablegemanövers des Schiffes initiierbar sein. Schließlich kann die Recheneinheit mit einer Anzeigeeinheit verbunden sein und die in der Messwertreihe hinterlegten Sensorwerte zumindest teilweise anzeigen.

Die Kajenschutzeinrichtung kann in einer weiteren Ausführungsform einen zu dem ersten Abstandssensor beabstandeten, insbesondere horizontal auf einer gleichen Höhe wie der erste Abstandssensor an einer Kaje angeordneten, zweiten Abstandssensor aufweisen. Unter Verwendung eines zweiten Abstandssensors sind weitere Schiffsparameter, wie ein Annäherungswinkel des Schiffes an die Kaje, ermittelbar.

Die Merkmale des Aspekts, Merkmalskombinationen sowie die sich aus diesen ergebenden Vorteile entsprechen denen des erstgenannten Erfindungsaspekts.

In einem weiteren Aspekt wird die Aufgabe gelöst durch ein Hafenterminal, welches eine erfindungsgemäße Kajenschutzeinrichtung aufweist.

Für diesen Aspekt entsprechen die Merkmale, Merkmalskombinationen sowie die sich aus diesen ergebenden Vorteile denen des erstgenannten Erfindungsaspekts.

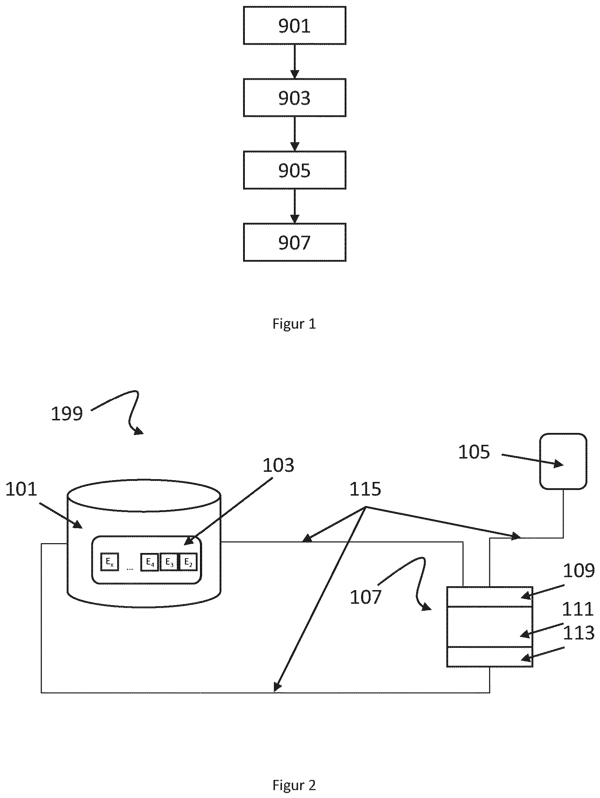

Im Weiteren wird die Erfindung anhand von Ausführungsbeispielen näher erläutert. Es zeigen
- Figur 1: ein Fließdiagramm eines erfindungsgemäßen Verfahrens,

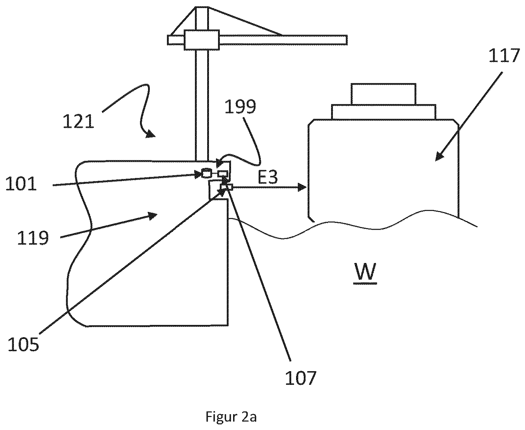

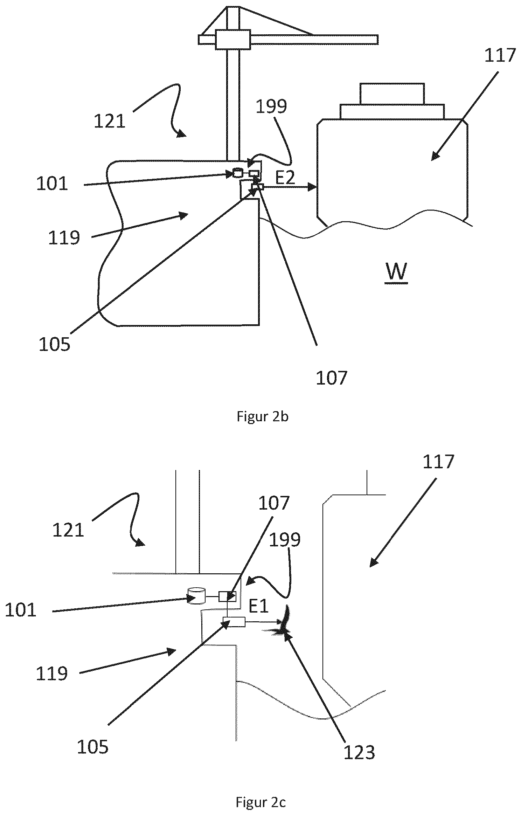

- Figur 2: eine schematische Darstellung einer Kajenschutzeinrichtung, welche zur Durchführung eines erfindungsgemäßen Verfahrens eingerichtet ist, sowie
- Figuren 2a bis 2c: eine schematische Darstellung einer Seitenansicht eines Hafenterminals, aufweisend eine erfindungsgemäße Kajenschutzeinrichtung, zu verschiedenen Zeitpunkten während eines Anlegemanövers eines Schiffes.

Eine Kajenschutzeinrichtung 199 ist an einer Kaje 119 angeordnet, welche einem Hafenterminal 121 zugeordnet ist. Im Wasser W vor der Kaje 119 schwimmt ein anlegendes Schiff 117. Die Kajenschutzeinrichtung 199 umfasst einen Speicher 101 und einen Radarsensor 105 sowie ein Steuergerät 107.

Das Steuergerät 107 weist einen Dateneingang 109, eine Auswerteeinheit 111 und einen Datenausgang 113 auf. Das Steuergerät 107 ist über den Dateneingang 109 mittels eines Kabels 115 mit dem Radarsensor 105 und dem Speicher 101 verbunden. Zudem ist das Steuergerät 107 über den Datenausgang 113 mittels eines Kabels 115 mit dem Speicher 101 verbunden. Über den Datenausgang 113 ist das Steuergerät 107 eingerichtet, von dem Radarsensor 105 ermittelte Sensorwerte in die Messwertreihe 103 auf dem Speicher 101 zu speichern, sowie in der Messwertreihe 103 auf dem Speicher 101 gespeicherte Sensorwerte über den Dateneingang 109 zu empfangen und zu verarbeiten. Zudem ist das Steuergerät 107 eingerichtet, mittels der Auswerteeinheit 111 programmtechnisch Sensorwerte auf ihre Plausibilität zu prüfen und/oder Parameter aus Sensorwerten abzuleiten. Schließlich ist das Steuergerät 107 eingerichtet, über den Datenausgang 113 ein Signal an den Speicher 101 auszusenden, woraufhin zumindest ein speichertechnisch in der Messwertreihe 103 hinterlegter Sensorwert gelöscht wird.

Der Radarsensor 105 ist an der Kaje 119 angeordnet und weist einen sich wasserseitig erstreckenden Erfassungsbereich auf. Der Radarsensor 105 misst Entfernungen zu Gegenständen in seinem Erfassungsbereich.

In der Messwertreihe 103 sind eine geprüfte, zu einem dritten Zeitpunkt t = -2s mittels des Radarsensors 105 ermittelte dritte Entfernung E3 = 35 m zwischen dem Radarsensor 105 und dem Schiff 117 sowie eine geprüfte, zu einem zweiten Zeitpunkt t = -1s mittels des Radarsensors 105 ermittelte zweite Entfernung E2 = 20 m hinterlegt. Das Steuergerät 107 ist eingerichtet, anhand der Entfernungen E2 und E3 eine Annäherungsgeschwindigkeit des Schiffes 117 an die Kaje 119 von 0,17 cm/s zu ermitteln.

Zu einem ersten Zeitpunkt t = 0 ermittelt der Radarsensors 105 eine erste Entfernung E1 = 1m zwischen dem Radarsensor 105 und dem Schiff 117 und übermittelt diese an das Steuergerät 107, welche ein Hinterlegen der ersten Entfernung 105 in der Messwertreihe 103 veranlasst. Das speichertechnische Hinterlegen kann in einer alternativen Ausführung entfallen. Die Messung der ersten Entfernung E1 ist auf Grund einer Störung zwischen dem Radarsensor 105 und dem Schiff 117 deutlich geringer als tatsächlich gegeben. Die Störung wird durch eine Möwe 123 verursacht. Gemäß des erfindungsgemäßen Verfahren wird mittels des Steuergerätes 107 festgestellt, dass die erste Entfernung E1 eine über einem Schwellwert von 0,17 cm/s liegende Abweichung zu der aus den Abständen E2 und E3 ermittelten Annäherungsgeschwindigkeit des Schiffes 117 aufweist. Im Ansprechen auf diese Feststellung veranlasst das Steuergerät 107 eine Elimination des Sensorwerts, welcher den Abstand E1 repräsentiert, aus der Messwertreihe 103. In der alternativen Ausgestaltung wird die erste Entfernung E1 im Ansprechen auf die Feststellung gar nicht erst der Messwertreihe 103 hinzugefügt.

In einem ersten Schritt 901 des erfindungsgemäßen Verfahrens wird mittels des Radarsensors 105 die erste Entfernung E1 zwischen dem Radarsensor 105 und dem Schiff 117 ermittelt. In einem weiteren Schritt 903 wird die erste Entfernung E1 zu der auf dem Speicher 101 hinterlegten Messwertreihe 103 hinzugefügt. Die in dem Speicher 101 zum ersten Zeitpunkt vorliegende Messwertreihe 103 weist weitere Einträge auf: die zweite Entfernung E2, die dritten Entfernung E3, eine vierten Entfernung E4 sowie weitere Entfernungen Ex sind speichertechnisch hinterlegt. Die Aufnahmezeitpunkte sind zeitlich absteigend. In einem Schritt 905 wird mittels der Auswerteeinheit 107 festgestellt, dass eine Abweichung des ersten Abstands E1 gegenüber dem unter Verwendung der zweiten Entfernung E2 ermittelten Annäherungsgeschwindigkeit des Schiffes 117 vorliegt. Im Ansprechen auf diese Feststellung wird die erste Entfernung E1 aus der Messwertreihe 103 eliminiert.

### Bezugszeichenliste

101 Speicher
103 Messwertreihe
105 Radarsensor
107 Steuergerät
109 Dateneingang
111 Auswerteeinheit
113 Datenausgang
115 Kabel
117 Schiff
119 Kaje
121 Hafenterminal
123 Möwe
199 Kajenschutzeinrichtung
W Wasser
E1 erste Entfernung (t = 0)
E2 zweite Entfernung (t = 1s)
E3 dritte Entfernung (t = 2s)
E4 vierte Entfernung (t = 3s)
Ex weitere Entfernung (t = xs)
t Zeitpunkt

## Patentansprüche

1. Verfahren zum Bereinigen einer mit Sensorwerten befüllten Messwertreihe (103), wobei die Messwertreihe (103) zu vordefinierten Zeitpunkten mit Sensorwerten befüllt ist, sodass die Messwertreihe (103) zu einem ersten Zeitpunkt eine Vielzahl speichertechnisch hinterlegter Sensorwerte aufweist und wobei die Messwertreihe (103) eine Datenbasis für eine Qualitätsbeurteilung eines Anlege- und/oder Ablegemanövers eines Schiffes (117) an einer Kaje (119) ist, aufweisend die Schritte:
- Ermitteln (901) eines ersten Sensorwerts (E1) während des Anlege- und/oder Ablegemanövers des Schiffes (117) mittels eines ersten landseitig angeordneten Abstandssensors (105) zum ersten Zeitpunkt,
- Hinzufügen (903) des ersten Sensorwertes (E1) zu der Messwertreihe (103),
- Feststellen (905) einer über einem vordefinierten Schwellwert liegenden Abweichung des ersten Sensorwerts (E1) gegenüber zumindest einem, zu dem ersten Zeitpunkt bereits in der Messwertreihe (103) speichertechnisch hinterlegten, zweiten Sensorwert (E2) oder gegenüber einem aus zumindest dem zweiten Sensorwert (E2) abgeleiteten Parameter mittels einer Auswerteeinheit (107) und im Ansprechen darauf
- Eliminieren (907) des ersten Sensorwertes (E1) aus der Messwertreihe (103), sodass eine bereinigte Messwertreihe für die Qualitätsbeurteilung des Anlege- und/oder Ablegemanövers des Schiffs (117) vorliegt.

2. Verfahren nach dem vorstehenden Anspruch, wobei der zweite Sensorwert (E2) derjenige Sensorwert der Vielzahl in der Messwertreihe (103) zum ersten Zeitpunkt speichertechnisch hinterlegter Sensorwerte ist, welcher den jüngsten Speicherzeitunkt aufweist.

3. Verfahren nach einem der vorstehenden Ansprüche, wobei der abgeleitete Parameter eine mathematische Ableitung des zweiten Sensorwertes (E2) und eines dritten, zum ersten Zeitpunkt bereits in der Messwertreihe (103) speichertechnisch hinterlegten, Sensorwertes (E3), eines vierten, zum ersten Zeitpunkt bereits in der Messwertreihe (103) speichertechnisch hinterlegten, Sensorwertes (E4) und/oder eines weiteren, zum ersten Zeitpunkt bereits in der Messwertreihe (103) speichertechnisch hinterlegten, Sensorwertes (Mx) eine Vorschubgeschwindigkeit des Schiffes (117) ist.

4. Verfahren nach einem der vorstehenden Ansprüche, wobei der vordefinierte Schwellwert zur Beurteilung einer Abweichung des ersten Sensorwerts (E1) gegenüber zumindest dem zweiten Sensorwert (E2) oder gegenüber dem aus zumindest dem zweiten Sensorwert (E2) abgeleiteten Parameter ein Zeitintervall zwischen einem Aufnahmezeitpunt des zweiten Sensorwertes und einem Aufnahmezeitpunt des ersten Sensorwertes berücksichtigt und +/- 0,5 cm/s bis +/- 0,17 cm/s beträgt.

5. Verfahren nach einem der vorstehenden Ansprüche, wobei der erste Abstandssensor (105) an der Kaje (119) angeordnet ist und derart eingerichtet ist, dass wasserseitig ein Erfassungsbereich des ersten Abstandssensors (105) aufgespannt ist.

6. Verfahren nach einem der vorstehenden Ansprüche, wobei die Messwertreihe (103) dazu eingerichtet ist, als Datenbasis zur Ermittlung eines Energieeintrags in die Kaje (119) bei einer Kollision des Schiffs (119) mit der Kaje (119) verwendbar zu sein.

7. Verfahren nach einem der vorstehenden Ansprüche, weiter umfassend die Schritte:
- Ermitteln eines fünften Sensorwertes mittels des ersten Abstandssensors (105) und eines sechsten Sensorwertes mittels eines horizontal zu dem ersten Abstandssensor (105) angeordneten zweiten Abstandssensor zu einem zweiten Zeitpunkt,
- Hinzufügen des fünften Sensorwertes und des sechsten Sensorwertes zu der Messwertreihe (103),
- Feststellen eines Anlegewinkels des Schiffes (117) in Bezug auf die Kaje (119) anhand des fünften Sensorwertes und des sechsten Sensorwertes mittels der Auswerteeinheit (107),
- Feststellen einer über einem vordefinierten Schwellwert liegenden Abweichung des festgestellten Anlegewinkels gegenüber einem aus zumindest zwei speichertechnisch in der Messwertreihe (103) zum zweiten Zeitpunkt bereits hinterlegten Sensorwerten festgestellten Anlegewinkel Sensorwertes mittels der Auswerteeinheit (107)und im Ansprechen darauf
- Eliminieren des fünften Sensorwertes und des sechsten Sensorwertes aus der Messwertreihe (103).

8. Kajenschutzeinrichtung (199), welche zum Ausführen eines Verfahrens nach einem der vorstehenden Ansprüche 1 - 7 eingerichtet ist und einen an einer Kaje (119) angeordneten ersten Abstandssensor (105) sowie eine über einen Dateneingang (109) mit dem ersten Abstandssensor (105) datenaustauschend verbundene Auswerteeinheit (107) aufweist, welche über einen Datenausgang (113) mit einem Speicher (101) verbunden ist, in welchem eine Messwertreihe (103) hinterlegt ist, welcher zu vordefinierten Zeitpunkten Messwerte hinzugefügt werden, sodass die Messwertreihe (103) vor einem ersten Zeitpunkt eine Vielzahl speichertechnisch hinterlegter Sensorwerte aufweist, wobei mittels des ersten Abstandssensors (105) zum ersten Zeitpunkt, während eines Anlege- und/oder Ablegemanövers eines Schiffes (117) an der Kaje (119), ein erster Sensorwert (E1) ermittelbar ist, wobei die Auswerteeinheit (107) ausgestaltet und eingerichtet ist, den ersten Sensorwert (E1) zu der Messwertreihe (103) hinzuzufügen und festzustellen, dass der erste Sensorwert (E1) gegenüber einem zu dem ersten Zeitpunkt bereits in der Messwertreihe (103) speichertechnisch hinterlegten zweiten Sensorwert (E2) oder gegenüber einem aus zumindest dem zweiten Sensorwert (E2) abgeleiteten Parameter mit einer über einem vordefinierten Schwellwert liegenden Abweichung abweicht und im Ansprechen darauf den ersten Sensorwert (E1) aus der Messwertreihe (103) zu eliminieren, sodass eine bereinigte Messwertreihe (103) vorliegt.

9. Kajenschutzeinrichtung (199) nach Anspruch 8, wobei die Kajenschutzeinrichtung zusätzlich eingerichtet ist, die in dem Speicher (101) speichertechnisch hinterlegten Sensorwerte einer Recheneinheit zur Qualitätsbeurteilung des Anlege- und/oder Ablegemanövers des Schiffes (117) und/oder Beeinflussung des Anlege- und/oder Ablegemanövers des Schiffes (117) bereitzustellen.

10. Kajenschutzeinrichtung (199) nach Anspruch 8 oder 9, zusätzlich aufweisend einen horizontal zu dem ersten Abstandssensor (105) beabstandeten zweiten Abstandssensor.

11. Hafenterminal (121), aufweisend eine Kajenschutzeinrichtung (199) nach einem der Ansprüche 8 - 10.
